# DEMANDE DE BREVET EUROPEEN

(11) **EP 1 961 397 A1**
(43) Date de publication de la demande: **27.08.2008**
(21) Numéro de dépôt: 08100858.3
(22) Date de dépôt: 24.01.2008
(51) Int. Cl.: A61C 8/00

(54) **Ensemble implantable dans l'os de la machoire et installation pour la pose d'un tel ensemble**

(30) Priorité: 24.01.2007 FR 0752850
(71) Demandeur: Textile Hi-Tec (T.H.T.), 34220 Verreries de Moussans (FR)
(72) Inventeur: Bader, Gérard, 35760 St. Gregoire (FR); Giquel, Loïc, 34170 Castelnau le Lez (FR); Houard, William, 81270 Labastide-Rouairoux (FR)
(74) Mandataire: Hennion, Jean-Claude

(57) **Abrégé**

L'ensemble implantable dans l'os de la mâchoire comprend :
a) une vis d'ancrage (8) comportant une partie inférieure filetée (2) pour l'ancrage dans l'os, une partie supérieure ayant au moins une portion de section polygonale (4) apte à coopérer avec un outil de vissage, et une partie intermédiaire (5) ayant deux faces d'appui supérieure et inférieure,
b) et au moins un élément fixable (14) apte à coopérer avec la vis d'ancrage (8), pouvant être fixé à la partie supérieure et/ou être appliqué sur l'une desdites faces d'appui (5) et qui est un élément pré prothétique ou orthodontique.

Avantageusement l'ensemble comporte une plaque d'adaptation (18) permettant le maintien de l'élément fixable (14), à une distance réglable de la vis d'ancrage (8), s'appliquant sur la face inférieure d'appui pour son blocage par coincement entre ladite face d'appui et la zone de la mâchoire dans laquelle la vis d'ancrage (8) est implantée.

## Description

La présente invention concerne le domaine des implants dentaires, incluant tant le domaine des prothèses que de l'orthodontie. Elle concerne plus particulièrement un ensemble implantable comprenant une vis d'ancrage et un élément apte à coopérer avec ladite vis, ledit élément pouvant être soit pré prothétique, soit orthodontique selon les besoins du praticien. Elle concerne également une installation, prête à l'emploi, pour la pose d'un tel ensemble.

Dans le domaine des prothèses dentaires, le remplacement d'une dent défectueuse par une prothèse nécessite de réaliser au moins une empreinte et de procéder à des essayages préalables. Les praticiens mettent alors en oeuvre des prothèses amovibles et temporaires, permettant d'attendre la mise en place des prothèses définitives.

Depuis quelques années, on a proposé une solution transitoire fixe sous la forme d'un implant temporaire, se présentant comme une vis de petit diamètre surmontée d'un pilier destiné à recevoir la chape prothétique. Cette solution permet d'attendre sereinement la réalisation prothétique définitive pendant l'ostéointégration de l'implant endo-osseux. Cette solution est particulièrement avantageuse lorsqu'il y a eu une greffe d'apposition osseuse, puisqu'elle évite les risques de conflit avec le greffon osseux générés par les compressions exercées par la prothèse temporaire amovible.

Dans le domaine de l'orthodontie, on utilise des moyens, tels qu'élastiques de traction, fils ou ligatures, dont l'action progressive sur les dents doit permettre assurer à terme la correction d'un mauvais positionnement. Ces moyens doivent nécessairement avoir un ancrage solide pour supporter les forces que nécessite leur action. Cet ancrage est généralement obtenu par fixation interne, par exemple à l'aide de crochets, sur certaines dents et aussi de manière extra orale.

Depuis quelques années, on a proposé une fixation interne sous la forme d'implants orthodontiques, par exemple décrits dans les documents WO02/03880A1 et US2005/0095550A1, consistant en une vis, qui est implantable dans l'os de la mâchoire à l'aide d'un outil de vissage et qui est surmontée d'une tête sur laquelle peut être connecté un élastique de traction.

Etant donné que la force de traction de l'élastique est exercée selon le grand axe de la vis, il peut, dans certains cas, y avoir un risque d'arrachage de cet implant. Pour éviter ce risque, on a proposé par le document WO02/091941 un dispositif permettant de décaler le point de traction par rapport au point d'ancrage. Ce dispositif comprend une première partie d'ancrage dans l'os de l'une des mâchoires supérieure ou inférieure, une seconde partie de montage sur un appareil d'orthodontie et une troisième partie de connexion, reliant les première et seconde parties. La première partie consiste en une plaque percée de plusieurs trous pour le passage de vis d'ancrage. La seconde partie consiste en une tête partiellement sphérique percée de trous. La troisième partie consiste en une tige coudée de section circulaire, dont les extrémités s'adaptent aux première et seconde parties avec une certaine capacité de pivotement, ce qui permet de faire varier l'orientation de la tête sphérique par rapport à la plaque d'ancrage.

Toutes ces évolutions récentes obligent les fabricants de matériels à une grande diversification de leurs produits dans les domaines bien distincts que sont le domaine de la prothèse dentaire et de celui de l'orthodontie.

La présente invention a pour but de pallier cet inconvénient.

Il s'agit d'un ensemble implantable dans l'os de la mâchoire qui comprend :
a) une vis d'ancrage comportant une partie inférieure filetée pour l'ancrage dans l'os, une partie supérieure ayant au moins une portion de section polygonale apte à coopérer avec un outil de vissage, et une partie intermédiaire, entre lesdites parties inférieure et supérieure, avec une face d'appui supérieure et une face d'appui inférieure,
b) et au moins un élément qui est apte à coopérer avec la vis d'ancrage, pouvant être fixé à la partie supérieure et/ou être appliqué sur l'une des faces d'appui de la partie intermédiaire et qui est soit un élément pré prothétique soit un élément orthodontique.

Ainsi, une même vis d'ancrage standardisée peut être utilisée soit en coopération avec un élément fixable pré prothétique pour la formation d'un implant prothétique temporaire soit en coopération avec un élément fixable orthodontique pour la formation d'un implant orthodontique ou bien du type décrit dans le document US2005/0095550A1 ou bien du type décrit dans le document WO02/091941A1.

Selon une variante de réalisation, la portion de section polygonale de la partie supérieure de la vis d'ancrage, dite première vis d'ancrage, est surmontée d'une portion filetée pour la fixation directe ou indirecte de l'élément fixable par vissage.

Selon un mode de réalisation de cette variante, l'élément fixable a un corps principal qui comporte un trou borgne dont le fond est taraudé pour son vissage sur la portion filetée de la partie supérieure de la vis d'ancrage et, à l'opposé dudit trou borgne, une portion de section polygonale apte à coopérer avec un outil de vissage. Ce mode de réalisation est spécialement adapté à la fixation directe de l'élément fixable sur la première vis d'ancrage, par exemple - dans le domaine des prothèses dentaires - pour former un implant temporaire ou - dans le domaine de l'orthodontie - pour former un simple implant orthodontique du type décrit dans le document US2005/0095550A1.

S'agissant de former un implant temporaire, de préférence le corps principal de l'élément fixable a une structure symétrique de révolution autour de l'axe longitudinal du fond taraudé, notamment une structure globalement tronconique, le trou borgne étant formé dans la grande base du corps principal et la portion de section polygonale étant disposée au-dessus de la petite base du corps principal. De plus, le trou borgne du corps principal comporte une cavité en avant du fond taraudé de telle sorte que, en fin de vissage, la grande base du corps principal s'applique sur la face supérieure d'appui de la partie intermédiaire de la vis d'ancrage tandis que la portion de section polygonale de la partie supérieure de la vis d'ancrage est logée à l'intérieur de ladite cavité du trou borgne.

S'agissant de former un simple implant orthodontique, le corps principal de l'élément fixable comporte une encoche annulaire et/ou un trou débouchant pour recevoir un appareil d'orthodontie, par exemple un fil, une ligature ou un élastique de traction.

Dans une variante de réalisation, la partie supérieure de la vis d'ancrage, dite seconde vis d'ancrage, est constituée exclusivement de la portion de section polygonale. Cette variante est plus particulièrement destinée à la formation d'un implant orthodontique avec décalage du point de traction par rapport au point d'ancrage.

Dans ce cas, l'ensemble implantable de la présente invention comporte une plaque d'adaptation permettant le maintien de l'élément fixable, à une distance réglable de la seconde vis d'ancrage, ladite plaque étant destinée à être appliquée sur la face inférieure d'appui de la partie intermédiaire pour son blocage par coincement entre ladite face d'appui et la zone de la mâchoire dans laquelle la seconde vis d'ancrage est implantée.

Avantageusement, la plaque d'adaptation est déformable, à l'aide d'un outil manuel.

Dans un mode de réalisation de cette variante, la plaque d'adaptation comporte une lumière oblongue permettant le passage à coulissement de la partie inférieure de la seconde vis d'ancrage, jusqu'à mise en butée contre la face inférieure d'appui de la partie intermédiaire. Le praticien peut donc, très facilement, régler l'écartement entre les points d'ancrage et de traction par un simple déplacement de la plaque d'adaptation lors de la fixation de celle-ci par vissage de la seconde vis d'ancrage.

Dans un mode préféré de cette même variante, la plaque d'adaptation comporte une tête filetée et l'élément fixable comporte un trou borgne taraudé pour son vissage sur la tête filetée de la plaque d'adaptation.

Dans ce domaine de l'orthodontie, l'élément fixable peut présenter des structures différentes selon les applications.

Par exemple, un premier élément fixable peut comporter un corps principal ayant une structure symétrique de révolution autour de l'axe longitudinal du trou taraudé, notamment une structure partiellement sphérique, et comporter une encoche annulaire et/ou un trou débouchant pour recevoir un appareil d'orthodontie.

Par exemple, un second élément fixable peut comporter un corps principal en forme de crochet apte à recevoir un appareil d'orthodontie, par exemple un élastique de traction.

Par exemple un troisième élément fixable peut comporter un corps principal équipé d'un axe perpendiculaire au plan de la plaque de fixation et apte à recevoir un appareil d'orthodontie du type biellette.

Par exemple un quatrième élément fixable peut comporter d'une part un corps principal présentant une encoche pour le passage d'un appareil d'orthodontie du type arc transpalatin et d'autre part des moyens de blocage dudit appareil, une fois celui-ci introduit dans l'encoche.

La présente invention a également pour objet un ensemble comprenant :
- plusieurs premières vis d'ancrage,
- plusieurs secondes vis d'ancrage,
- plusieurs plaques d'adaptation,
- plusieurs éléments fixables (10) de type pré prothétique
- plusieurs premiers, seconds, troisièmes et/ou quatrièmes éléments fixables de type orthodontique.

De préférence, dans un tel ensemble, les portion filetées des parties supérieures des premières vis d'ancrage et les têtes filetées des plaques d'adaptation ont le même filetage, apte à coopérer avec le taraudage des trous taraudés des éléments fixables, qu'ils soient de type pré prothétique ou orthodontique.

C'est un autre objet de la présente invention que de revendiquer une Installation prête à l'emploi, pour la pose de tels ensembles implantables. Cette installation comporte un ancillaire de pose (32) comprenant :
- au moins un foret adapté au filetage de la partie inférieure des vis d'ancrage, pour la formation d'un trou dans l'os facilitant la mise en place des vis d'ancrage,
- au moins une pièce de vissage adapté à la portion de section polygonale de la partie supérieure des vis d'ancrage et des éléments fixables et
- un outil manuel rotatif sur lequel le foret et la pièce de vissage peuvent être montés en rotation.

De préférence, cette installation comporte également une pince pour la préhension et la déformation éventuelle des plaques d'adaptation.

De préférence, lorsque les plaques d'adaptation comporte une lumière, cette installation comporte également un outil présentant un manche et une tige coudée en S. De plus, une encoche pour le cintrage des plaques d'adaptation est formée à l'extrémité arrière du manche de l'outil et un ergot est formé à l'extrémité avant de la tige ; les diamètres de l'ergot et de l'extrémité de la tige sont respectivement inférieur et supérieur à la largeur de la lumière des plaques d'adaptation. Cet ergot est utile au praticien lors du réglage de l'écartement entre les points de traction et d'ancrage. En le positionnant en butée sur le fond de la lumière, il peut facilement déplacer la plaque d'adaptation jusqu'à la position adéquate.

La présente invention sera mieux comprise à la lecture de la description qui va être faite d'exemples préférés de réalisation d'ensembles implantables dans l'os de la mâchoire, à des fins pré prothétiques ou orthodontiques, illustrés par le dessin annexé dans lequel :
La figure 1 est une vue schématique en perspective d'un premier ensemble comprenant une première vis d'ancrage à partie supérieure filetée, un élément fixable pré prothétique et un premier élément fixable orthodontique, tous deux vissables sur la partie filetée de la première vis d'ancrage,
La figure 2 est une vue schématique en perspective d'un second ensemble comprenant une seconde vis d'ancrage, exempte de portion supérieure filetée, une plaque d'adaptation et le premier élément fixable orthodontique du premier ensemble de la figure 1,
La figure 3 est une vue schématique en perspective d'un second élément fixable orthodontique en forme de crochet,
La figure 4 est une vue schématique en perspective d'une biellette orthodontique et d'un troisième élément fixable orthodontique conçu pour être adapté à ladite biellette,
La figure 5 est une vue schématique d'un quatrième élément fixable orthodontique à encoche de fixation à un arc palatin, et
La figure 6 est une vue schématique en plan d'un ancillaire de pose des ensembles implantables.

L'ensemble implantable dont il est question a pour but de fournir aux praticiens, qu'ils soient dans le domaine de la prothèse dentaire ou de l'orthodontie, une gamme commune de matériels leur permettant d'aborder grand nombre de difficultés techniques. Un tel ensemble permet aux fabricants de réduire les coûts de production par une standardisation de leur fabrication.

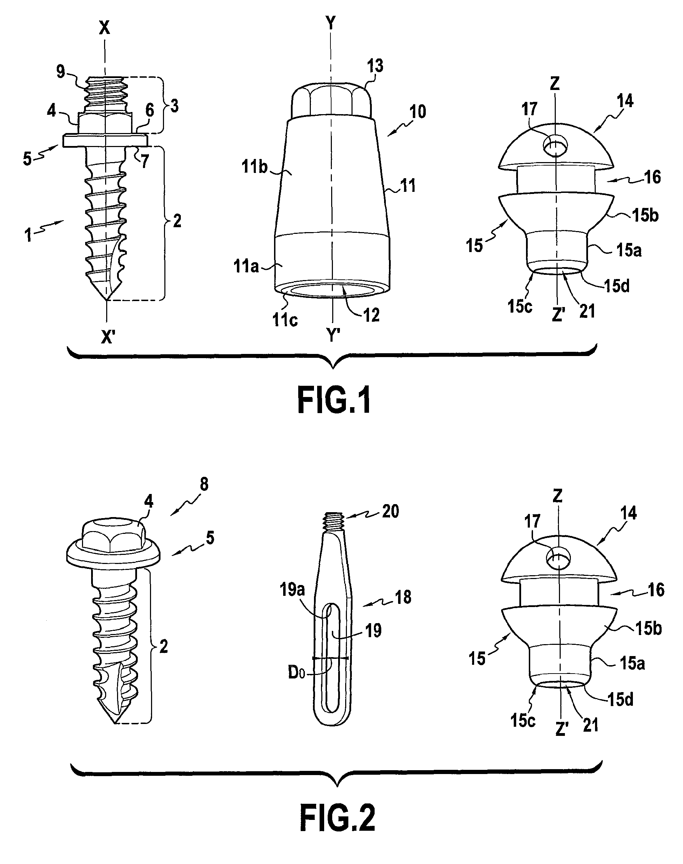

Le premier ensemble A, donné à titre d'exemple et illustré à la figure 1, comprend une vis d'ancrage 1, un élément fixable pré prothétique 10 et un premier élément fixable orthodontique 14.

La vis d'ancrage 1 de ce premier exemple est dénommée dans le présent texte « première vis d'ancrage » pour la distinguer de la vis d'ancrage 8 du second exemple illustré à la figure 2 qui est dénommée « seconde vis d'ancrage ».

Cette première vis d'ancrage 1 comporte une partie inférieure filetée 2, une partie supérieure 3 et une partie intermédiaire 5, qui est disposée entre les parties inférieure 2 et supérieure 3 et qui présente deux faces d'appui 6 et 7, à savoir une face d'appui supérieure 6 et une face d'appui inférieure.

La partie supérieure 3 comporte une portion basse 4 de section polygonale, apte à coopérer avec un outil de vissage 34 pour l'implantation de ladite vis 1 dans l'os, et une portion haute filetée 9, qui est disposée longitudinalement selon l'axe longitudinal XX' de vissage de la première partie filetée 2. Dans l'exemple illustré, la portion basse 4 est immédiatement attenant à la face d'appui supérieure 6 de la partie intermédiaire 5, celle-ci débordant transversalement au-delà de cette portion basse 4.

Cette première vis d'ancrage 1 est de préférence une vis métallique, monobloc.

L'élément fixable pré prothétique 10, qui est également de préférence métallique et monobloc, présente un corps principal 11 qui a une structure symétrique de révolution autour de l'axe longitudinal YY'. Dans l'exemple illustré, le corps principal 11 a une portion basse cylindrique 11a et une portion haute tronconique 11b. Le corps principal11 est surmonté d'un prolongement 13 de section polygonale, apte à coopérer avec un outil de vissage 34. De plus, le corps principal 11 comporte un trou borgne 12 dont le fond, non visible sur la figure 1, est taraudé pour le vissage de cet élément pré prothétique 10 sur la portion haute filetée 9 de la première vis d'ancrage 1. Le taraudage est formé selon l'axe longitudinal YY', qui lors du vissage se confond avec l'axe XX'. Le trou borgne 12 est formé dans la base 11c de la portion cylindrique 11a. Il comporte, en avant du fond taraudé, une cavité dimensionnée pour servir de logement à la portion basse 4 de section polygonale de la partie supérieure 3 de la première vis d'ancrage 1.

Lors de la fixation par vissage de cet élément fixable pré prothétique 10 sur la première vis d'ancrage 1, la face annulaire de la base 11c qui entoure la cavité du trou borgne 12 vient en butée contre la face supérieure d'appui 6 de la première vis d'ancrage 1, la partie supérieure 3 de ladite vis 1 étant entièrement logée à l'intérieur du trou borgne 12. On obtient ainsi une parfaite étanchéité de l'ensemble implanté vis-à-vis des aliments qu'ils soient solides ou liquides.

Le premier élément fixable orthodontique 14, qui est également de préférence métallique et monobloc, présente un corps principal 15 qui a une structure symétrique de révolution autour de l'axe longitudinal ZZ'. Dans l'exemple illustré, le corps principal 15 a une portion basse cylindrique 15a et une portion haute sphérique 15b, dans laquelle est formée une encoche annulaire 16. Au-dessus de l'encoche, un trou débouchant 17 est formé dans la portion sphérique, passant par l'axe ZZ', perpendiculairement à celui-ci.

De plus le corps principal 15 comporte un trou borgne 21, qui est percé dans la base 15d de la portion basse cylindrique 15a et dont le fond, non visible sur la figure 1, est taraudé pour le vissage de ce premier élément fixable orthodontique 14 sur la portion haute filetée 9 de la partie supérieure 3 de la première vis d'ancrage 1. Le taraudage est formé selon l'axe longitudinal ZZ', qui lors du vissage se confond avec l'axe XX'.

De préférence, le trou borgne 21 peut avoir la même structure que celui 12 de l'élément pré prothétique 10, avec une cavité apte à servir de logement à la portion basse 4 de section polygonale de la première vis d'ancrage 1. Cependant, il peut ne comporter que le fond taraudé, auquel cas, en fin de vissage, la face annulaire 15c de la base 15d de la portion cylindrique 15a du corps principal 15 vient en butée contre la face supérieure de la portion basse 4 de section polygonale de la première vis d'ancrage 1, ladite face supérieure s'étendant transversalement au-delà de la portion haute filetée 9.

L'encoche annulaire 16 et le trou débouchant 17 servent au montage d'un appareil d'orthodontie, par exemple un fil, une ligature ou un élastique de traction. Le second ensemble implantable B, donné à titre d'exemple et illustré à la figure 2, comprend une seconde vis d'ancrage 8, un premier élément fixable orthodontique 14 et une plaque d'adaptation 18.

La seconde vis d'ancrage 8 se distingue de la première vis d'ancrage 1 décrite ci-dessus en ce que sa partie supérieure 3 est exempte de portion haute filetée, ne comportant qu'une portion 4 de section polygonale.

La plaque d'adaptation 18, de préférence métallique et monobloc, est une plaque de forme allongée et de faible épaisseur, présentant une lumière longitudinale oblongue 18 de largeur D₀. Elle est terminée, à l'une de ses extrémités, par une tête filetée 20 pour sa fixation par vissage sur le premier élément fixable orthodontique 14. De préférence, grâce à sa faible épaisseur et au matériau dont elle est constituée, elle peut être déformée par le praticien, à l'aide d'un outil manuel, pour son adaptation à toutes les surfaces osseuses, convexes ou concaves, contre lesquelles elle viendra s'appliquer.

Le premier élément fixable orthodontique 14 a strictement la même structure que celui décrit ci-dessus et illustré à la figure 1. Le taraudage du fond du trou borgne 21 doit bien sûr être en correspondance avec le filetage de la tête filetée 20 de la plaque d'adaptation 18.

Pour obtenir le blocage et donc la fixation du premier élément fixable orthodontique 14 sur la seconde vis d'ancrage 8, le praticien place la plaque d'adaptation 18 au-dessus de la zone de l'os dans laquelle il a préalablement foré un trou pour faciliter l'implantation de la seconde vis 8 ; plus précisément il place la lumière 19 au-dessus dudit trou, introduit la partie inférieure filetée 2 de la vis 8 à travers la lumière 19 et dans le trou en question, déplace la plaque d'adaptation 18 en fonction du positionnement qu'il souhaite puis réalise le vissage complet de la vis 8 jusqu'à obtenir le coincement de la plaque d'adaptation 18 entre la face inférieure d'appui 7 de la partie intermédiaire 5 de la vis 8 et la zone de la mâchoire dans laquelle cette seconde vis d'ancrage 8 est implantée.

On comprend que le coulissement de la plaque d'adaptation 18 permet au praticien de régler l'écartement qu'il souhaite entre le point d'ancrage de la vis 8 et le point de traction de l'appareil d'orthodontie correspondant à l'encoche annulaire 16 ou au trou débouchant 17 du premier élément fixable orthodontique 14. Elle permet en particulier d'obtenir un ancrage en muqueuse libre, à distance des racines ou apex des dents proximales.

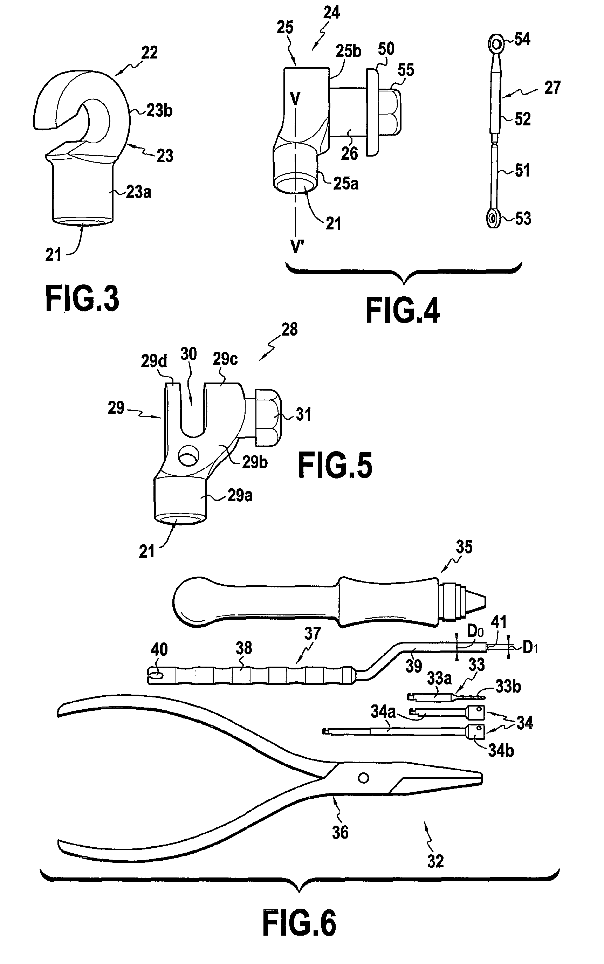

D'autres variantes de réalisation d'éléments fixables orthodontiques, utiles au praticien en fonction des situations cliniques qu'il rencontre, sont illustrées aux figures 3 à 5.

La figure 3 illustre un second élément fixable orthodontique 22 dont le corps principal 23 a une portion basse cylindrique 23a et une portion haute en forme de crochet 23b. La portion basse cylindrique 23a est strictement identique à celle 15a du premier élément 14 décrit ci-dessus avec un trou borgne 21 dont le fond est taraudé pour le vissage de l'élément 22 sur la tête filetée 20 de la plaque d'adaptation 18. La portion haute en forme de crochet 23b, de préférence s'étendant en fin de vissage dans le plan de la plaque 18, permet d'obtenir un ancrage peu volumineux dans l'axe longitudinal de la plaque et de faciliter le placement d'un élastique de traction par le patient.

La figure 4 illustre un troisième élément fixable orthodontique 24 dont le corps principal 25 est équipé d'un axe 26, apte à servir d'axe de fixation et de pivotement d'un appareil d'orthodontie du type biellette 27, notamment une biellette de Herbst. Plus précisément, dans l'exemple illustré, le corps principal 25 a une portion basse cylindrique 25a qui a la même structure et la même fonction que la portion basse cylindrique 15a du premier élément fixable orthodontique 14. Il a de plus une portion haute 25b en forme d'anneau plat, dans l'évidement central duquel est monté l'axe 26. Cet axe 26 est creux avec un trou central taraudé pour permettre la fixation par vissage d'un flasque circulaire 50 surmonté d'une portion de section polygonale 55.

La biellette 27 est destinée à relier de manière rigide deux appareils d'orthodontie montés respectivement sur chacune des deux mâchoires supérieure et inférieure, sans pour autant gêner les mouvements normaux desdites mâchoires. Elle comporte deux pièces tubulaires 51,52 articulées entre elles, l'une 51 étant une simple tige et l'autre 52 un jeu de deux tiges télescopiques. Les extrémités libres des deux pièces tubulaires sont pourvues de deux têtes annulaires plates 53,54.

Après avoir implanté dans l'os la seconde vis d'ancrage 8 et la plaque d'adaptation 18, sur laquelle est fixé le corps central 25 du troisième élément fixable orthodontique 24, le praticien emmanche l'une des têtes plates annulaires 53,54 de la biellette sur l'axe 26 du troisième élément 24, puis rapporte par vissage le flasque 50. La direction de l'axe 26 est perpendiculaire à l'axe longitudinal de vissage VV' du fond taraudé.

L'utilisation de ce troisième élément fixable orthodontique 24, en conjonction avec la biellette 27 , permet d'éviter les problèmes dus aux forces parasites des systèmes intermaxillaires habituellement mis en oeuvre, dans lesquels les forces orales étaient exercées directement sur les dents.

La figure 5 illustre un quatrième élément fixable orthodontique 28 dont le corps principal 29 est pourvu d'une encoche 30 destiné plus particulièrement au passage d'un appareil d'orthodontie du type arc transpalatin. Ce corps principal comporte une portion basse 29a cylindrique ayant la même structure et la même fonction que la portion basse cylindrique 15a du premier élément fixable orthodontique 14. Il a de plus une portion haute 29b en forme de C, dont les deux ailes latérales 29c,29d délimitent l'encoche 30 tournée vers le haut. L'une des ailes latérales 29c est percée d'un trou taraudé dans lequel peut être vissée une vis de blocage 31.

Après avoir implanté dans l'os la seconde vis d'ancrage 8 et la plaque d'adaptation 18 sur laquelle est fixé le corps principal 29 du quatrième élément fixable orthodontique 28, le praticien peut introduire l'arc transpalatin dans l'encoche 30 et visser la vis de blocage 31 dans l'aile latérale 29c jusqu'à obtenir le coincement dudit arc contre la face intérieure à l'encoche 30 de l'autre aile latérale 29d et donc le blocage en position de l'arc transpalatin sur ledit quatrième élément 29.

Selon la présente invention, le fournisseur met à la disposition des praticiens une gamme complète d'ensembles implantables, leur permettant - à partir d'une base commune - de répondre aux difficultés techniques rencontrées dans la plupart des situations cliniques tant dans le domaine des implants pré prothétiques que celui des implants orthodontiques. Bien sûr, selon sa ou ses spécialités, le praticien choisira les ensembles dont il a besoin.

Sur la figure 6 est représenté un ancillaire de pose 32 qui regroupe tous les instruments dont un praticien peut avoir besoin pour mettre en oeuvre les ensembles implantables qui ont été décrits ci-dessus.

Dans l'exemple illustré, cet ancillaire 32 comprend :
- un foret 33,
- deux pièces de vissage 34,
- un outil manuel rotatif 35,
- une pince 36,
- un outil manuel de cintrage et de positionnement 37 de la plaque d'adaptation 18.

Le foret 33 et les pièces de vissage 34 comportent une tige 33a,34a dont une extrémité est adaptée pour pouvoir être montée sur l'outil manuel 35 et entraînée en rotation par celui-ci. Le filetage de la portion filetée 33b du foret , qui prolonge ladite tige 33a, est choisi en fonction du filetage des premières et secondes vis d'ancrage, pour pré percer l'os et ainsi faciliter la mise en place desdites vis.

Les pièces de vissage 34 ont une tête avant 34b de vissage, qui prolonge la tige 33a, et qui comporte un évidement intérieur ouvert qui, au jeu près, a en creux la configuration de toutes les portions à section polygonale des vis d'ancrage et des éléments fixables pré prothétiques et orthodontiques décrites ci-dessus. Les deux pièces de vissage 34 ne diffèrent l'une de l'autre que par la longueur de la tige 33.

La pince 36 à mâchoires plates sert à la tenue de la plaque d'adaptation 18 et éventuellement à sa déformation.

L'outil manuel 37 peut être utilisé d'une part pour le cintrage et d'autre part pour le positionnement de la plaque d'adaptation. Il comporte un manche de préhension 38 et, au-delà de ce manche 38, une tige coudée en S 39. Dans l'extrémité libre du manche 38 est formée une encoche 40 dans laquelle le praticien peut introduire à chant la plaque d'adaptation 18 pour la cintrer. L'extrémité libre de la tige 39 supporte un ergot 41 de positionnement. Le diamètre D₁ de cet ergot 41 est inférieur à la largeur D₀ de la lumière de la plaque d'adaptation 18, tandis que le diamètre D₂ de la tige coudée 39, au moins à son extrémité libre portant l'ergot 41 est supérieur à cette largeur D0. Ainsi l'ergot 41, coulissant dans la lumière 19, peut servir de guide lorsque le praticien déplace l'extrémité de la tige coudée 39 le long de la plaque d'adaptation 18 jusqu'à venir en butée contre le fond 19a de la lumière 19 et entraîner ladite plaque 18 à se déplacer sous la face inférieur d'appui 7 de la partie intermédiaire 5 de la seconde vis d'ancrage 8.

Toutes les pièces des ensembles implantables dont il a été question ci-dessus peuvent être faites à partir de matériaux métalliques implantables tels que le titane, l'acier inoxydable ou des matériaux résorbables. Ces pièces sont stérilisées aux rayons gamma.

L'utilisation des ensembles implantables de la présente invention est indiquée dans l'orthopédie dento-faciale et les traitements pré prothétiques. Ils permettent de corriger les malpositions dentaires, les malformations dento-alvéolaires, les dysmorphoses osseuses et aussi les troubles inter-arcades par égressions dentaires.

## Revendications

1. Ensemble implantable (A,B) dans l'os de la mâchoire **caractérisé en ce qu'**il comprend :
a) une vis d'ancrage (1,8) comportant une partie inférieure filetée (2) pour l'ancrage dans l'os, une partie supérieure (3) ayant au moins une portion de section polygonale (4) apte à coopérer avec un outil de vissage, et une partie intermédiaire (5), entre lesdites parties inférieure et supérieure, qui a une face d'appui supérieure (6) et une face d'appui inférieure (7),
b) et au moins un élément fixable qui est apte à coopérer avec la vis d'ancrage, pouvant être fixé à la partie supérieure (3) et/ou être appliqué sur l'une des faces d'appui (6,7) de la partie intermédiaire (5) et qui est soit un élément pré prothétique soit un élément orthodontique.
et **en ce que** la portion de section polygonale (4) de la partie supérieure (3) de la vis d'ancrage (1) est surmontée d'une portion filetée (9) pour la fixation directe de l'élément fixable (10) par vissage.

2. Ensemble selon la revendication 1 **caractérisé en ce que** l'élément fixable (10) a un corps principal (11) qui comporte un trou borgne (12) dont le fond est taraudé pour son vissage sur la portion filetée (9) de la partie supérieure (3) de la vis d'ancrage (1) et, à l'opposé dudit trou borgne (12), une portion de section polygonale (13) apte à coopérer avec un outil de vissage.

3. Ensemble selon la revendication 2, destiné à former un implant pré prothétique, **caractérisé en ce que** le corps principal (11) de l'élément fixable (10) a une structure symétrique de révolution autour de l'axe longitudinal (YY') du fond taraudé, notamment une structure globalement tronconique, le trou borgne (12) étant formé dans la grande base (11c) du corps principal (11) et la portion de section polygonale (13) étant disposée au-dessus de la petite base du corps principal (11) et **en ce que**, en fin de vissage, la grande base (11c) du corps principal (11) s'applique sur la face supérieure d'appui (6) de la partie intermédiaire (5) de la vis d'ancrage (1) tandis que la portion de section polygonale (4) de la partie supérieure(3) de la vis d'ancrage (1) est logée à l'intérieur du trou borgne (12).

4. Ensemble selon la revendication 2, destiné à former un simple ancrage orthodontique, **caractérisé en ce que** le corps principal (15) de l'élément fixable orthodontique (14) comporte une encoche annulaire (16) et/ou un trou (17) débouchant pour recevoir un appareil d'orthodontie, par exemple un fil, une ligature ou un élastique de traction.

5. Ensemble selon la revendication 1 **caractérisé en ce que** la partie supérieure (3) de la vis d'ancrage (8) est constituée exclusivement de la portion de section polygonale (4).

6. Ensemble selon la revendication 5 **caractérisé en ce qu'**il comporte une plaque d'adaptation (18) permettant le maintien de l'élément fixable (14,22,24,28), à une distance réglable de la vis d'ancrage (8), ladite plaque (18) étant destinée à être appliquée sur la face inférieure d'appui (7) de la partie intermédiaire (5) de ladite vis (8) pour son blocage par coincement entre ladite face d'appui (7) et la zone de la mâchoire dans laquelle la vis d'ancrage (8) est implantée.

7. Ensemble selon la revendication 6 **caractérisé en ce que** la plaque d'adaptation (18) est déformable, à l'aide d'un outil manuel.

8. Ensemble selon l'une des revendications 6 ou 7 **caractérisé en ce que** la plaque d'adaptation (18) comporte une lumière oblongue (19) permettant le passage à coulissement de la partie inférieure (2) de la vis d'ancrage (8), jusqu'à mise en butée contre la face inférieure d'appui (7) de la partie intermédiaire (5).

9. Ensemble selon l'une des revendications 6 à 8 **caractérisé en ce que** la plaque d'adaptation (18) comporte une tête filetée (20) et **en ce que** l'élément fixable (14,22,24,28) comporte un trou borgne taraudé (21) pour son vissage sur la tête filetée (20) de la plaque d'adaptation (18).

10. Ensemble selon la revendication 9 **caractérisé par** un premier élément fixable orthodontique (14) qui comporte un corps principal (15) ayant une structure symétrique de révolution autour de l'axe longitudinal (ZZ') du trou taraudé (21), notamment une structure partiellement sphérique, et qui comporte une encoche annulaire (16) et/ou un trou (17) débouchant pour recevoir un appareil d'orthodontie.

11. Ensemble selon la revendication 9 **caractérisé par** un second élément fixable orthodontique (22) qui comporte un corps principal (23) en forme de crochet apte à recevoir un appareil d'orthodontie, par exemple un élastique de traction.

12. Ensemble selon la revendication 9 **caractérisé par** un troisième élément fixable orthodontique (24) qui comporte un corps principal (25) équipé d'un axe (26) perpendiculaire au plan de la plaque de fixation (18) et apte à recevoir un appareil d'orthodontie du type biellette (27).

13. Ensemble selon la revendication 9 **caractérisé par** un quatrième élément fixable orthodontique (28) qui comporte d'une part un corps principal (29) présentant une encoche (30) pour le passage d'un appareil d'orthodontie du type arc transpalatin et d'autre part des moyens de blocage (31) dudit appareil, une fois celui-ci introduit dans l'encoche (30).

14. Ensemble selon la revendication 1 comprenant :
- plusieurs premières vis d'ancrage (1) selon la revendication 2,
- plusieurs secondes vis d'ancrage (8) selon la revendication 6,
- plusieurs plaques d'adaptation (18) selon la revendication 10,
- plusieurs éléments fixables (10) de type pré-prothétique selon les revendications 3 ou 4
- plusieurs premiers, seconds, troisièmes et/ou quatrièmes éléments fixables (14,22,24,28) de type orthodontique selon les revendications 11 à 14,
**caractérisé en ce que** les portion filetées (9) des parties supérieures (3) des premières vis d'ancrage (1) et les têtes filetées (20) des plaques d'adaptation (18) ont le même filetage, apte à coopérer avec les trous taraudés (12,21) des éléments fixables pré prothétiques (10) et des premiers, seconds, troisièmes et quatrièmes (14,22,24,28) éléments fixables orthodontiques.

15. Installation prête à l'emploi, pour la pose d'ensembles implantables selon la revendication 14 **caractérisée en ce qu'**elle comporte un ancillaire de pose (32) comprenant :
- au moins un foret (33) adapté au filetage de la partie inférieure des vis d'ancrage (1,8),
- au moins une pièce de vissage (34) adapté aux portions de section polygonale de la partie supérieure des vis d'ancrage (1,8) et des éléments fixables (10,24,28) et
- un outil manuel rotatif (35) sur lequel le foret (33) et la pièce de vissage (34) peuvent être montés à rotation.

16. Installation selon la revendication 15 **caractérisée en ce qu'**elle comporte une pince (36) pour la préhension et la déformation éventuelle des plaques d'adaptation (18).

17. Installation selon l'une des revendications 15 ou 16 **caractérisée en ce qu'**elle comporte un outil (37) présentant un manche (38) et une tige coudée en S (39), **en ce qu'**une encoche(40) pour le cintrage des plaques d'adaptation (18) est formée à l'extrémité arrière du manche (38) et **en ce qu'**un ergot (41)est formé à l'extrémité avant de la tige (39), les diamètres (D1,D2) de l'ergot (41) et de l'extrémité de la tige (39) portant l'ergot étant respectivement inférieur et supérieur à la largeur (D0) de la lumière (19) des plaques d'adaptation (18).
